# EUROPEAN PATENT APPLICATION

(11) **EP 0 527 697 A1**
(43) Date of publication of application: **17.02.1993**
(21) Application number: 92500101.8
(22) Date of filing: 03.08.1992
(51) Int. Cl.: B60B 11/02

(54) **Auxiliary wheel for motor vehicles**

(30) Priority: 14.08.1991 ES 9101976
(71) Applicant: Palau Valles, Mariano, E-08779 La Llacuna (Barcelona) (ES)
(72) Inventor: Palau Valles, Mariano, E-08779 La Llacuna (Barcelona) (ES)
(74) Representative: Renter Llenas, Maria

(57) **Abstract**

Auxiliary wheel for motor vehicles, characterized by a flange (13) to be incorporated to the steel rim (15) of the auxiliary wheel (1), which flange is assembled with capacity to rotate freely on a special flange (8) to be secured to the wheel bolts (11) of the corresponding main wheel (2) of the vehicle, having means (17) for eventually locking together the flange (13) carrying the auxiliary wheel (1) and the special flange (8) to be assembled to the corresponding main wheel (2) of the vehicle. The optional locking of the auxiliary wheel to the main wheel may be carried out by a number of bolts (17) capable of being lodged in opposite holes (18) of the special flange (8) assembled to the corresponding main wheel of the vehicle.

The arrangement is aimed at obtaining a better stability in motor vehicles, specially on roads with a poor surface, ice, loose gravel or similar.

## Description

This invention refers to an auxiliary wheel applicable to motor vehicles, being aimed at safety purposes.

As it is well known, the roadholding and stability conditions for motor vehicles are substantially affected by the conditions of the road such as surface characteristics of the same, eventual existence of loose gravel, ice or similar, as well as the configuration of the route, speed of the vehicle, etc. Under such varying driving conditions the stability and roadholding of the vehicle are jeopardized up to a certain point, so that in some cases the danger may exist of the vehicle going out of the road or that it may overturn. In other cases, a high probability may exist for the skidding of the wheels, this meaning a loss of traction, or grip, with the subsequent danger of a brusque alteration of the trajectory of the vehicle.

This invention is specially aimed at an auxiliary wheel for motor vehicles with a safety purpose, permiting to obtain much better rolling conditions both concerning stability and traction, in cases in which abnormal conditions appear on the rolling surface given the existence of mud, loose gravel, ice, etc. as is often the case in autumn, winter or in mountain roads.

Basically, this invention consists in a safety wheel to be associated to the normal vehicle wheels, on the external side of the same, by means of an special flange incorporating a hub for the auxiliary wheel, which flange is to be easily assembled to the corresponding wheel of the vehicle, by which expedient the four wheels of the vehicle or eventually two of said four wheels will incorporate auxiliary wheels, which will contribute an essential improvement of the stability and roadholding characteristics of the vehicle. As it is obvious, in case that it is desired to obtain a complete assistance for improving the roadholding, recourse will have to be taken to the assembly of auxiliary wheels to each and all of the wheels of the vehicle, while in other cases, it will be sufficient to associate auxiliary wheels to the driving wheels of the vehicle. It has been foreseen as well that for vehicles towing load carrying trailers, which have a higher tendency to irregular skidding and pose a higher dificulty to the driving and overall stability, the safety auxiliary wheel will be exclusively incorporated to the trailer wheels.

To increase the anti-skidding effect of this safety wheel, it may eventually have some nails or studs specially adequate for driving on ice, snow and other difficult surfaces.

The flange for the assembly of the safety auxiliary wheel will be fastened to the corresponding steel wheel of the vehicle by the same bolts which will usually secure said steel wheel, incorporating a hub for the auxiliary wheel which has bearings, preferably tapered roller bearings, and an external flange to be secured by wheel bolts to the auxiliary wheel.

While the auxiliary wheel will be assembled to the vehicle with the capacity to rotate freely, eventually some bolts could be used for securing the auxiliary wheel to the main wheel of the vehicle. In a simplified version, said assembly will be carried out by means of threaded bolts on the flange for the assembly of the auxiliary wheel, which bolts may be introduced in recesses of the hub for the auxiliary wheel, making one wheel integral with the other. This assembly of the auxiliary wheel to the driving wheel may be specially advisable to drive on snow with the aim of incorporating the very well known anti-skid chains.

For its better understanding an exemple of this invention will be described, based on the attached drawings, in which:

Figures 1 and 2 are respectively a view from the top and a side view of a vehicle carrying the safety auxiliary wheels of this invention.

Figure 3 is a cross section of a device for the assembly of the auxiliary wheel to one of the main wheels of the vehicle. Figure 4 corresponds to a said view of the same assembly unit of figure 3.

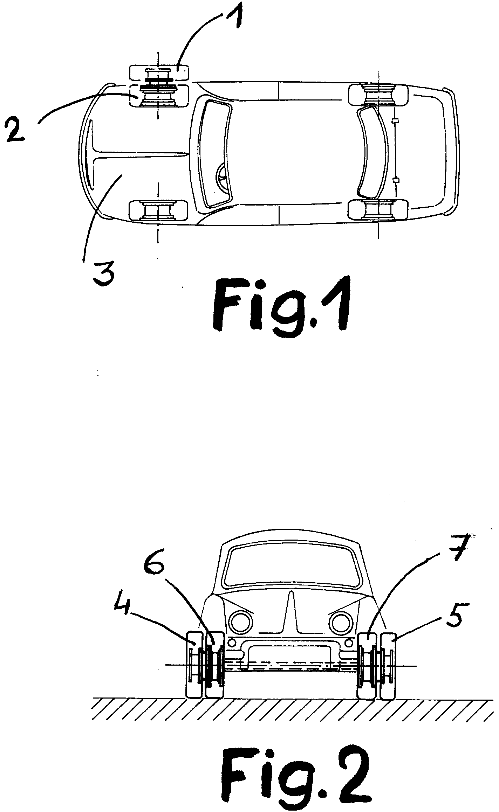

As shown in the drawings, the auxiliary wheel which bears the reference numeral -1- in figure 1 will be assembled to the external part of the corresponding wheel -2- of a vehicle -3-.

The auxiliary wheel will be usually incorporated whether in two of the four wheels of the vehicle, that is, the driving wheels, or alternatively to all of the four wheels. In the case which has been shown in figure 2 the auxiliary wheels -4- and -5- have been secured to the driving wheel -6- and -7- of the vehicle.

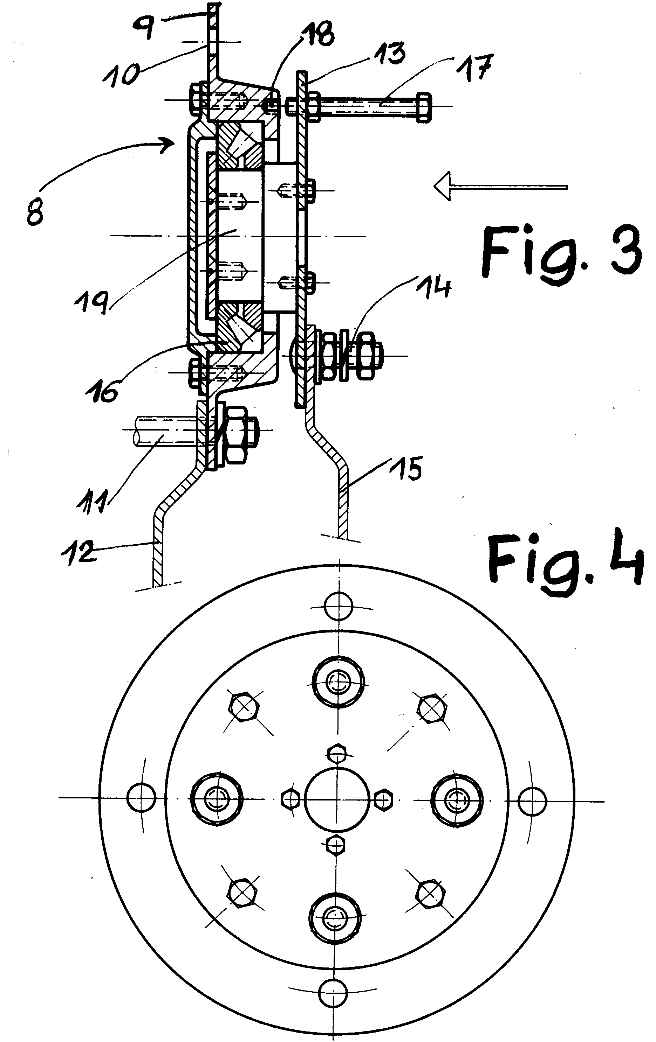

The assembly will be preferably carried out by means of a hub which bears the reference numeral -8-, which has been shown in cross section in figure 3, comprising a flange or plate -9- with holes -10- in order that the wheel bolts -11- of the steel wheel -12- of the vehicle may secure the plate -9- which carries the bearings for supporting the shaft or rotating part -19- which has a flange -13- to receive, by means of bolts -14-, the steel rim -15- of the auxiliary wheel.

The bearings -16- have been shown in the case of the figure in form of tapered roller bearings.

While the auxiliary wheel will be assembled preferably to rotate freely in respect to the corresponding main wheel of the vehicle, there will be the possibility to make is rotation integral with that of the main wheel by means of pins or bolts -17- or a similar arrangement. The pins -17- may be fastened by threading or a similar system to the steel rim -12-, particulary they may be introduced by its ends on housings -18- of the flange, -9-, making the auxiliary wheel integral with the corresponding main wheel. This may be of interest in cases of extreme difficulty for driving the vehicle.

As it is to be understood, the embodiment which has been described will have only the character of an exemple. Many variations may be introduced by persons skilled in the art without departing from the scope of this invention as claimed in the following claims.

## Claims

**1.-** AUXILIARY WHEEL FOR MOTOR VEHICLES, characterized by a flange (13) to be incorporated to the steel rim (15) of the auxiliary wheel (1), which flange is assembled with capacity to rotate freely on a special flange (8) to be secured to the wheel bolts (11) of the corresponding main wheel (2) of the vehicle, having means (17) for eventualy locking together the flange (13) carrying the auxiliary wheel (1) and the special flange (8) to be assembled to the corresponding main wheel (2) of the vehicle.

**2.-** AUXILIARY WHEEL FOR MOTOR VEHICLES, according to claim 1, characterized by the assembly of bearings (16) between a shaft (19) which is integral with the flange (13) assembled to the auxiliary wheel, and the special flange (8) assembled to the main wheel of the vehicle, permiting the free rotation between both elements.

**3.-** AUXILIARY WHEEL FOR MOTOR VEHICLES, according to claim 1, characterized in that the flange (13) to be assembled to the auxiliary wheel (1) has a number of bolts (17) capable of being lodged in opposite holes (18) of the special flange (8) assembled to the corresponding main wheel of the vehicle, permiting to make the rotation of the auxiliary wheel (1) integral with the rotation of the corresponding main wheel (2).
